# EUROPÄISCHE PATENTSCHRIFT

(11) **EP 2 208 623 B1**
(45) Veröffentlichungstag und Bekanntmachung des Hinweises auf die Patenterteilung: **19.11.2014**
(21) Anmeldenummer: 09000154.6
(22) Anmeldetag: 08.01.2009
(51) Int. Cl.: B60C 23/04

(54) **Ventilvorrichtung, Fahrzeugreifendruckmesseinheit und Fahrzeugreifendrucksystem**
Valve device, vehicle tyre pressure measuring unit and vehicle tyre pressure system
Dispositif de soupape, dispositif de mesure et système de pression des pneus de véhicules

(43) Veröffentlichungstag der Anmeldung: 21.07.2010
(73) Patentinhaber: Global Dynamix AG, 7500 St. Moritz (CH)
(72) Erfinder: Achterholt, Rainer, 8597 Landschlacht (CH)
(74) Vertreter: Samson & Partner

(56) Entgegenhaltungen:
- WO-A-2008/031552
- WO-A1-80/01435
- DE-A1- 2 923 258
- DE-A1- 4 303 591
- DE-C1- 3 841 995
- DE-U1-202008 009 412
- FR-A- 2 909 589
- GB-A- 2 433 605
- US-A- 5 731 516
- US-A1- 2007 044 552
- US-A1- 2008 276 995
- US-B1- 6 799 455

## Beschreibung

### Gebiet der Erfindung

Die vorliegende Erfindung betrifft im Allgemeinen den Bereich der Messung und Erfassung von Drücken in Fahrzeugreifen.

### Hintergrund der Erfindung

Zur Erfassung von Reifendrücken eines Fahrzeugreifens ist es bekannt, innerhalb von Fahrzeugreifen, beispielsweise mit einem Ventil des Reifen verbunden, Druckmessvorrichtungen anzuordnen. Ferner ist es bekannt, von solchen Messvorrichtungen erzeugte, erfasste Reifendrücke angebende Daten drahtlos, beispielsweise zu einer zentralen Fahrzeugsteuerung zu übermitteln.

Nachteile bekannter Ansätze umfassen das Gesamtgewicht der verwendeten Messvorrichtungen, das zu Unwucht von Fahrzeugrädern führen kann. Ferner kann es bei der Anordnung der Messvorrichtung am Ventil zu einer Gewichtsverteilung kommen, die zum Verkippen und/oder Verdrehen des Ventils bis hin zur Undichtigkeit des Ventils und damit zu Druckverlust des Fahrzeugreifens führen kann. So ist man bemüht, von der Druckmessvorrichtung hervorgerufene Kräfte und Momente aufgrund der Reifendrehungen minimiert werden.

Bekannte Ansätze umfassen Ventilanordnungen, bei denen eine Druckmessvorrichtung mit einem Ventil baueinheitlich integriert bereitgestellt wird (z.B. in ein gemeinsames Kunststoffgehäuse eingeschweißt). Nachteilig sind hierbei die aufwändige Herstellung und der Umstand, dass die Druckmessvorrichtung bzw. deren Komponenten nicht ausgetauscht werden können.

Ferner sind Ventilanordnungen bekannt, bei denen eine Druckmessvorrichtung und ein Ventil als getrennte Bauteile ausgeführt sind und mittels einer Rast- oder Schnappverbindung miteinander verbunden werden. Als nachteilig hat sich hier die Verbindung von Druckmessvorrichtung und Ventil herausgestellt, weil sich diese Verbindung in bestimmten Situationen ungewollt lösen kann, beispielsweise bei hohen Fahrzeuggeschwindigkeiten und/oder unebenen Fahrbahnoberflächen bzw. im Gelände. Dem gegenüber kann ein Austausch der Druckmesseinrichtung zumindest schwierig, wenn nicht unmöglich sein, wenn die Verbindung von Druckmesseinrichtung und Ventil nicht ohne Beschädigung des Ventils erfolgen kann. Auch ist der Herstellungsprozess aufwändig, weil Druckmesseinrichtung und Ventil als separate Komponenten vorgehalten und zusammengebaut werden müssen.

Die US 5,731,516 offenbart ein Ventil für einen Fahrzeugreifen. Das Ventil weist einen Ventilhauptkörper auf, in dem an einem Ende ein Nadelventil angeordnet ist und dessen gegenüberliegendes Ende eine topfförmige Aufnahme aufweist. In der topfförmigen Aufnahme sind Komponenten zur Druckerfassung im Inneren eines Reifens angeordnet, sowie Komponenten, um erfasste Reifendrücke angebende Messsignale zu übertragen. Diese Komponenten sind an einem Haltebauteil angeordnet. Das Haltebauteil ist fest mit dem Ende des Ventils verbunden, an dem die Aufnahme angeordnet ist.

Die WO 2008/031552 A1 offenbart ein Fahrzeugreifenventil, das an dem zur Anordnung im Reifeninneren vorgesehenen Ende einen Befestigungsbereich aufweist. Der Befestigungsbereich des Ventils ist für eine Rast- und/oder Schnappverbindung mit einem Befestigungselement vorgesehen. Das Befestigungselement dient zur Aufnahme einer Reifendruckmessvorrichtung, wofür in dem Befestigungselement eine Aufnahme ausgebildet ist.

Die US 2007/0044552 A1 offenbart einen Reifendruckdetektor, der alle Merkmale des Oberbegriffs von Anspruch 1 offenbart und zur vollständigen Anordnung außen an einer Felge auslegt ist und mit Druck aus dem Reifeninneren über ein herkömmliches Fahrzeugreifenventil beaufschlagt werden kann. Bei dem Reifendruckdetektor ist ein Ventilhauptkörper zur Anordnung außen einer Felge vorgesehen, erstreckt sich eine Reifendruckmessvorrichtungsaufnahme bei an der Felge befestigtem Ventilhauptkörper von der Felgenaußenseite weg, erstreckt sich ein Durchgang durch den Ventilhauptkörper und sorgt für eine Fluidverbindung zwischen der Ventilaufnahme und einem Reifenventil und erstreckt sich der Teil des Ventilkörpers mit der Ventilaufnahme bei an der Felge befestigtem Ventilhauptkörper 26 ebenfalls von der Felgenaußenseite weg.

Die GB 24 33605-A- ebenfalls offenbart eine relevante Fahrzeugreifendruckmesseinheit.

### Aufgabe der Erfindung

Aufgabe der vorliegenden Erfindung ist es, Lösungen zu Erfassung von Fahrzeugreifendrücken bereitzustellen, die einen sichereren Betrieb ermöglichen, bei denen Druckmesseinrichtungen oder Komponenten davon einfacher ausgetauscht werden können und die einfacher herzustellen sind.

### Kurze Beschreibung der Erfindung

Zur Lösung der Aufgabe stellt die Erfindung eine Fahrzeugreifendruckmesseinheit und ein Fahrzeugreifendrucksystem gemäß dem unabhängigen Anspruch bereit.

Der Aufnahmeraum kann eine zylindrische Seitenwand und/oder einen im Wesentlichen planen Boden aufweisen. Insbesondere ist es bevorzugt, dass der Aufnahmeraum als Hülse ausgestaltet ist.

Der plastisch verformbare Bereich kann als Bördelbereich oder -rand (auch als Crimpbereich oder -rand bezeichnet) ausgebildet sein und kann verwendet werden, um die Reifendruckmessvorrichtung in dem Aufnahmeraum und damit in der Reifendruckmessvorrichtungsaufnahme zu sichern.

Wenigstens ein Teil des Ventilhauptkörper oder auch der Ventilhauptkörper insgesamt kann wenigstens einen Teil einer Antenne für die Reifendruckmessvorrichtung bilden.

Der Ventilhauptkörper kann wenigstens teilweise aus einem elektrisch leitfähigem Material, vorzugsweise Aluminium, aufgebaut sein.

Die Ventilvorrichtung kann auch mit einem in der Ventilaufnahme angeordneten Ventil bereitgestellt werden.

Die Ventilvorrichtung umfasst einen sich durch den Ventilhauptkörper erstreckenden Durchgang zur Fluidverbindung der Ventilaufnahme und eines den Ventilhauptkörper umgebenden Bereichs. Dieser Durchgang kann dazu dienen, um einen Reifen mit Gas oder Luft zu befüllen. Der Durchgang kann benachbart zu der Reifendruckmessvorrichtungsaufnahme angeordnet sein. Ergänzend oder alternativ kann eine solche Fluidverbindung über den Aufnahmeraum bereitgestellt werden, indem beispielsweise die Reifendruckmessvorrichtung und/oder der Aufnahmeraum so ausgestaltet sind, dass sich zwischen diesen ein Durchgang für Luft oder Gas ergibt.

Vorzugsweise weist die Reifendruckmessvorrichtung ein elastisch gelagertes Koppelelement zur elektrischen Kopplung mit den Ventilhauptkörper auf.

Das Koppelelement kann insbesondere als Kopplung mit dem als Antenne dienenden Teil des Ventilhauptkörpers dienen. Bei solchen Ausführungen kann das Koppelelement mit einer Antenne oder einem Antennenausgang einer Sendeeinrichtung der Reifendruckmessvorrichtung verbunden sein.

Das Koppelelement kann einen elektrisch leitfähigen Stift oder Kugel und eine Feder zur elastischen Lagerung des Stifts bzw. der Kugel umfassen.

Im zusammengebauten Zustand kann das Koppelelement eine Innenwand des Aufnahmeraums, vorzugsweise an dessen der Aufnahmeöffnung gegenüberliegenden Seite (z.B. der Boden des Aufnahmeraums) kontaktieren.

Das Druckmessmodul weist einen Modulgehäusehauptkörper und einen Modulgehäusedeckel auf, der mit dem Modulgehäusehauptkörper verbindbar ist, vorzugsweise mittels einer Schraubverbindung und/oder einer Schnapp- oder Rastverbindung.

An und/oder in dem Modulgehäusehauptkörper können z.B. elektrische, elektronische, optoelektrische Komponenten, Leiterplatte(n), Chip(s), Steuereinrichtung(en), Sende- und/oder Empfangskomponenten, Sensor(en), insbesondere Drucksensor(en) usw. angeordnet sein. Es ist z.B. vorgesehen, derartige Komponenten auf einer gemeinsamen Leiterplatte angebracht an dem Modulgehäusehauptkörper so anzuordnen, dass die Leiterplatte im zusammengebauten Zustand dem Boden des Aufnahmeraums gegenüberliegend positioniert ist; d.h. mit anderen Worten möglichst "tief" im Aufnahmeraum. Bei weiteren Ausführungsformen kann die Leiterplatte benachbart zu der Aufnahmeöffnung angeordnet werden.

Bei weiteren Ausführungsformen kann das Druckmessmodul einen Batterieaufnahmeraum zur Aufnahme eines Energiespeichers (z.B. Batterie, Akkumulator) aufweisen. Der Batterieaufnahmeraum kann z.B. nur im Modulgehäusehauptkörper oder nur im Modulgehäusedeckel vorgesehen oder durch im Modulgehäusehauptkörper und/oder Modulgehäusedeckel ausgebildete Ausnehmung definiert sein. Der Batterieaufnahmeraum kann im Druckmessmodul an der Seite angeordnet sein, die im zusammengebauten Zustand am oder benachbart zu der Aufnahmeöffnung liegt, oder an der Seite, die im zusammengebauten dem Boden des Aufnahmeraums gegenüberliegt.

Der Batterieaufnahmeraum kann mittels des Modulgehäusedeckels verschließbar sein, um einen angeordneten Energiespeicher zu sichern.

Vorzugsweise ist der Modulgehäusedeckel lösbar. (z.B. verschraubbar und/oder verrastbar) mit dem Modulgehäusehauptkörper verbindbar, was einen Austausch des Energiespeichers ermöglichen kann. Dabei ist es insbesondere vorgesehen, dass der Modulgehäusedeckel über die Aufnahmeöffnung des Ventilhauptkörpers zugänglich ist; bei solchen Ausführungen kann der Austausch des Energiespeichers auch erfolgen, wenn die Druckmessvorrichtung mit dem Ventilhauptkörper verbunden ist.

Das Fahrzeugreifendrucksystem weist wenigstens eine Fahrzeugreifendruckmesseinheit und eine Empfangseinrichtung zum Empfang von von einer der Fahrzeugreifendruckmesseinheiten gesendeten Signalen auf.

Vorzugsweise umfasst das Fahrzeugreifendrucksystem auch eine Sendeeinrichtung zum Senden von Signalen zu einer der Fahrzeugreifendruckmesseinheiten.

Ferner kann das Fahrzeugreifendrucksystem eine Steuerung aufweisen, um Reifendruck angebende Signale der wenigstens einen Fahrzeugreifendruckmesseinheit auszuwerten und/oder die wenigstens eine Fahrzeugreifendruckmesseinheit zu steuern.

### Kurze Beschreibung der Zeichnungen

Im Folgenden werden bevorzugte Ausführungsformen der vorliegenden Erfindung unter Bezugnahme auf die beigefügten Zeichnungen erläutert, die zeigen
- Fig. 1: eine schematische Querschnittsansicht einer Ausführungsform mit einem Ventilhauptkörper und einer Reifendruckmessvorrichtung vor deren Zusammenbau,

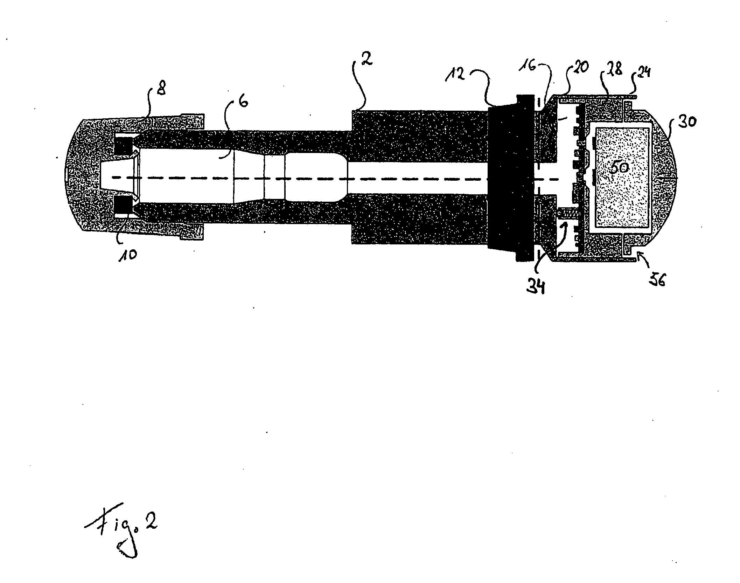

- Fig. 2: eine schematische Querschnittsansicht der Ausführungsform von Fig. 1 im zusammengebauten Zustand,
- Fig. 3: eine schematische Querschnittsansicht einer weiteren Ausführungsform mit Ventilhauptkörper und Reifendruckmessvorrichtung, und
- Fig. 4: eine schematische Ansicht des in Fig. 3 mit einem Kreis markierten Bereichs nach Verformung des plastisch verformbaren Bereichs der Reifendruckmessvorrichtungsaufnahme.

### Beschreibung bevorzugter Ausführungsformen

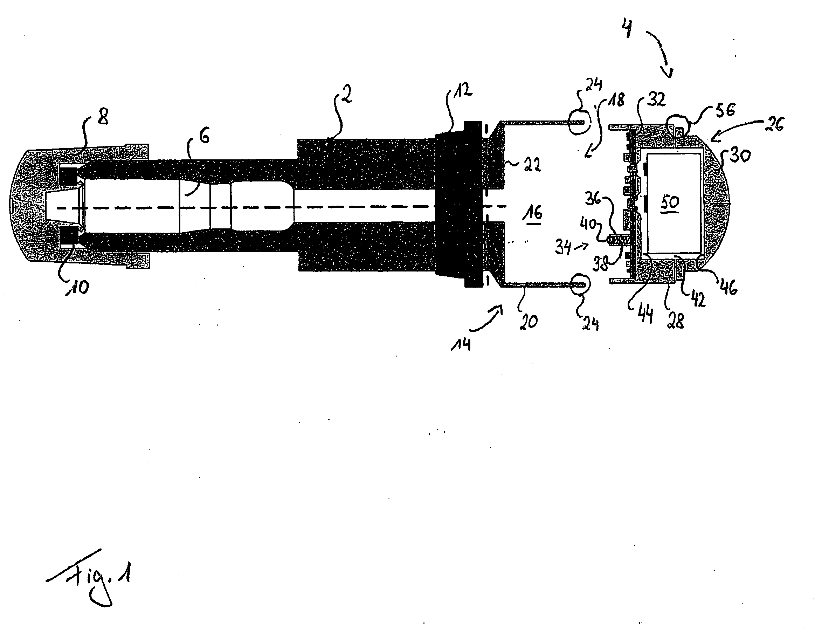

Fig. 1 zeigt in einem schematischen Querschnitt entlang der Längsachse einer Ausführungsform mit einem Ventilhauptkörper 2 und einer Reifendruckmessvorrichtung 4 in (noch) nicht zusammengebautem Zustand.

Der Ventilhauptkörper 2 weist eine Ventilaufnahme 6 auf, in die ein (nicht gezeigtes) Ventil eingebracht werden kann. An seinem darstellungsgemäß linken Ende des Ventilhauptkörpers 2 kann eine Ventilkappe 8 angeordnet werden, die beispielsweise auf ein dort vorgesehenes Außengewinde des Ventilkörpers 2 aufgeschraubt werden kann. Um die Dichtigkeit zwischen Ventilhauptkörper 2 und Ventilkappe 8 zu verbessern, kann ein Dichtelement 10 (z.B. O-Ring) verwendet werden.

Der Ventilhauptkörper 2 ist zur Anordnung in einer Ventillochbohrung einer Felge vorgesehen. Eine am Ventilhauptkörper 2 angeordnete Dichtung 12 kann nicht nur zur Abdichtung zwischen dem Ventilhauptkörper 2 und der Felge dienen, sondern auch für eine (zusätzliche) Sicherung des Ventilhauptkörpers 2 in der Ventillochbohrung der Felge.

Der Ventilhauptkörper 2 weist an seinem darstellungsgemäß rechten Ende eine Reifendruckmessvorrichtungsaufnahme 14 auf. Bei an einer Felge befestigtem Ventilhauptkörper 2 erstreckt sich die Reifendruckmessvorrichtungsaufnahme 14 von der entsprechenden Innenseite der Felge weg, während der darstellungsgemäß links von der Dichtung 12 gezeigte Teil des Ventilhauptkörpers 2 sich von der Felgenaußenseite weg erstreckt. Die Reifendruckmessvorrichtungsaufnahme 14 umfasst einen Aufnahmeraum 16 und eine Aufnahmeöffnung 18. Bei der dargestellten Ausführungsform hat der Aufnahmeraum 16 eine zylindrische Seitenwand 20 und einen im Wesentlichen planen Boden 22. Bei weiteren Ausführungen kann der Aufnahmeraum 16 rechteckige, quadratische, ovale, mehreckige oder andere Querschnitte auf weisen, die z.B. in Abhängigkeit der Bauform der jeweiligen Reifendruckmessvorrichtung 4 so gewählt werden kann, um beispielsweise eine möglichst kleine Bauform zu ermöglichen. Auch die Ausgestaltung des Bodens 22 kann so gewählt sein, dass eine minimierte Bauform erreicht wird. Benachbart zu der Aufnahmeöffnung 18 hat die Reifendruckmessvorrichtungsaufnahme 14 einen plastisch verformbaren Bereich 24. Bei der gezeigten Ausführungsform ist der plastisch verformbare Bereich 24 am freien Ende der Seitenwand 20 vorgesehen.

Die Reifendruckmessvorrichtung 4 umfasst ein im Ganzen mit 26 bezeichnetes Druckmessmodul auf. Das Druckmessmodul umfasst einen Modulgehäusehauptkörper 28 und einen Modulgehäusedeckel 30, die beispielsweise aus Kunststoff hergestellt sein können. An dem Modulgehäusehauptkörper 28 sind elektrische und/oder elektronische Komponenten beispielsweise unter Verwendung einer Platine 32 angeordnet. Die (im Einzelnen nicht bezeichneten) elektrischen und/oder elektronischen Komponenten dienen zur Druckerfassung, entsprechender Messsignale und zur Übertragung derselben und umfassen dafür einen Drucksensor mit integrierter und/oder separat ausgeführter Auswertung und Steuerung und eine Sendeeinrichtung zum Übertragen der Messsignale per Funk. Zur Funksignalübertragung kann es erforderlich sein, die Messsignale in entsprechende Funksignale umzuwandeln. Zu übertragende Signale werden über einen Antennenausgang zu einem elektrisch leitenden und elastisch gelagerten Koppelelement 34 geleitet. Das Koppelelement 34 kann, wie beispielsweise gezeigt, eine Hülse 36 aufweisen, in der eine Feder 38 zur elastischen Lagerung einer elektrisch leitenden Kugel 40 angeordnet ist. Bei ausreichender Torsionsfestigkeit der Feder 38 kann auf die Hülse 36 verzichtet werden. Alternative Ausführungen des Koppelelements 34 sind beispielsweise ein mittels einer Feder elastisch gelagerter Stift oder eine einzelne Feder, die einerseits mit der Platine 32 verbunden ist und andererseits eine Kontaktfläche aufweist.

Das Druckmessmodul 26 weist einen Batterieaufnahmeraum 42 auf, in dem ein Energiespeicher (z.B. Batterie, Akkumulator) zur Energieversorgung der elektrischen und/oder elektronischen Komponenten angeordnet werden kann. Bei der gezeigten Ausführungsform wird der Batterieaufnahmeraum 42 durch eine in dem Modulgehäusehauptkörper 28 ausgebildete Ausnehmung 44 und eine in dem Modulgehäusedeckel 30 ausgebildete Ausnehmung 46 gebildet. Bei anderen Ausführungsformen ist der Batterieaufnahmeraum 42 nur durch eine Ausnehmung im Modulgehäusehauptkörper 28 oder nur durch eine Ausnehmung im Modulgehäusedeckel 30 definiert.

Um den Modulgehäusehauptkörper 28 und den Modulgehäusedeckel 30 miteinander zu verbinden bzw. aneinander zu sichern, können Schraub-, Steck- und/oder Rast- oder Schnappverbindungen verwendet werden. Bei weiteren Ausführungsformen kann die Anordnung bzw. Sicherung des Modulgehäusedeckels 30 an dem Modulgehäusehauptkörper 28 mittels des plastischen verformbaren Bereichs 24 erreicht werden.

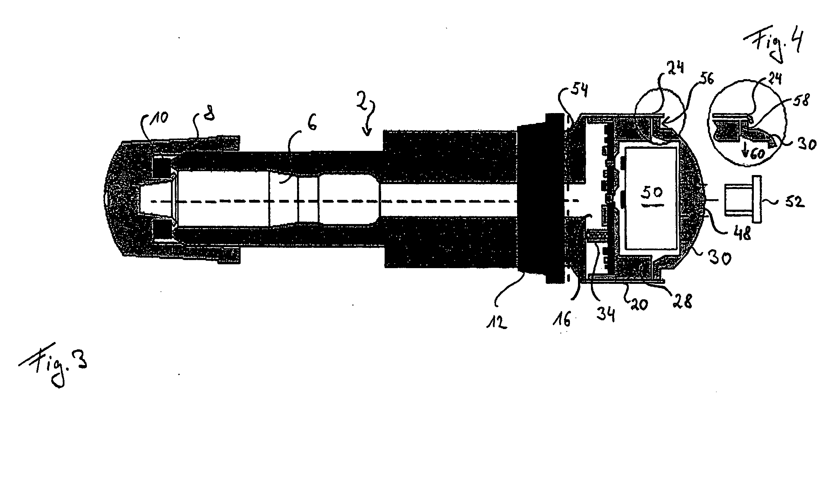

Der Modulgehäusedeckel 30 kann optional eine Gewindebohrung 48 (siehe Fig. 3) aufweisen, mittels der der Modulgehäusedeckel 30 von dem Modulgehäusehauptkörper 28 gelöst werden kann, um auf den Batterieaufnahmeraum 42 bzw. einen dort angeordneten Energiespeicher 50 zugreifen bzw. diesen austauschen zu können. Bei solchen Ausführungen kann der Modulgehäusedeckel 30 von dem Modulgehäusehauptkörper 28 gelöst werden, in dem eine Schraube 52 in die Gewindebohrung 48 eingeschraubt wird, bis die Schraube 52 den Energiespeicher 50 kontaktiert, wobei dann ein Weiterdrehen der Schraube 52 den Modulgehäusedeckel 48 von dem Modulgehäusehauptkörper 28 abhebt bzw. deren Verbindung löst. Ein im Ventilkörper 2 ausgebildeter Durchgang 54 sorgt für eine Fluidverbindung zwischen der Ventilaufnahme 6 bzw. dem Aufnahmeraum 16 und einem den Ventilhauptkörper 2 außen umgebenden Bereich, der bei Verwendung im Reifen liegt. Über den Durchgang 54, wenn Luft oder Gas in den Reifen gelangen und von dort entfernt werden.

Zum Zusammenbau wird die Reifendruckmessvorrichtung 4 durch die Aufnahmeöffnung 18 in den Aufnahmeraum 16 eingebracht, und zwar so, dass das Koppelelement 34 den Boden 22 des Aufnahmeraums 16 kontaktiert. Für einen sicheren Kontakt zwischen dem Boden 22 des Aufnahmeraums 16 und dem Koppelelement 34 wird die Reifendruckmessvorrichtung 4 so weit in den Aufnahmeraum 16 hinein eingebracht, dass das Koppelelement 34 elastisch gegen den Boden 23 vorgespannt ist und in elektrisch leitendem Kontakt mit diesem bleibt.

Zur Befestigung der Reifendruckmessvorrichtung 4 in der Reifendruckmessvorrichtungsaufnahme 14 wird der plastisch verformbare Bereich 24 beispielsweise durch Bördeln so verformt, dass er in Wirkverbindung mit der Außenseite der Reifendruckmessvorrichtung 4 kommt. Um die Wirkverbindung zwischen dem verformten Bereich 24 und der Außenseite der Reifendruckmessvorrichtung 4 zu verbessern, kann diese einen Absatz 56, Flansch, umlaufenden Ring oder eine andere geeignete Struktur aufweisen, gegen die der Bereich 24 verformt wird.

Wie in Fig. 3 und 4 ersichtlich, kann die Wirkverbindung zwischen dem verformten Bereich 24 und der Außenseite der Reifendruckmessvorrichtung 4 bzw. deren Absatz 56 auch dazu dienen, den Modulgehäusedeckel 30 an dem Modulgehäusehauptkörper 28 zu sichern.

Bei Ausführungsformen, bei denen der Bereich 24 nach seiner Verformung (auch) den Modulgehäusedeckel 30 kontaktiert, kann es erforderlich sein, den Bereich 24 wieder zurück zu biegen, um den Modulgehäusedeckel 30 zum Austausch des Energiespeichers 50 zu entfernen. Alternativ ist es möglich, den Modulgehäusedeckel 30 wenigstens in den mit dem verformten Bereich 24 zusammenwirkenden Bereich elastisch verformbar auszubilden, um den Modulgehäusedeckel 30 aus den von dem verformten Bereich 24 gebildeten Sitz zu entfernen. Bei Ausführungen des Modulgehäusedeckels 30 mit der Gewindebohrung 48 kann dies mittels der Schraube 52 erreicht werden. Dabei wird die Schraube 52 in die Gewindebohrung 48 geschraubt, bis sie den Energiespeicher 50 kontaktiert. Wird die Schraube 52 weiter gedreht, wird der Modulgehäusedeckel 30 von dem Modulgehäusehauptkörper 28 weg bewegt (d.h. in Fig. 3 nach rechts). Dabei wird ein sich nach außen erstreckender Rand oder Bereich 58 des Modulgehäusedeckels 30 in Richtung des Pfeils 60 bewegt und aus dem durch den verformten Bereich 24 gebildeten Sitz gezogen. Um den Modulgehäusedeckel 30 wieder an dem Modulgehäusehauptkörper 28 anzuordnen bzw. einen Energiespeicher 50 in der Batterieaufnahme 42 zu sichern, wird der Rand 58 in Richtung des Pfeils 60 verformt und bezüglich des verformten Bereichs 24 so positioniert und die Verformung des Randes 56 beendet, dass die in Fig. 4 gezeigte Stellung eingenommen werden kann.

Das Koppelelement 34 sorgt für eine elektrische Verbindung zwischen dem Ventilhauptkörper 2 bzw. elektrisch leitenden Bereichen desselben und dem Druckmessmodul 26, insbesondere dessen Sendeeinrichtung. Das Koppelelement 34 kann mit einer Antenne oder einem Antennenausgang des Druckmessmoduls 26 verbunden sein. Unabhängig davon dient der Ventilhauptkörper 2 wenigstens teilweise als Antenne zur Übertragung von Signalen von dem Druckmessmodul zu einer (beispielsweise zentralen) Empfangseinrichtung, mit der Reifendruck angebende Signale von einer oder mehreren Reifendruckmessvorrichtung empfangen werden können. Die Empfangseinrichtung kann beispielsweise ein Teil einer speziell vorgesehenen Steuer- und/oder Auswertevorrichtung (z.B. als separate in der Fahrgastzelle eines Fahrzeugs verwendbare Vorrichtung) oder in eine im Fahrzeug bereitgestellte Vorrichtung (z.B. ECU) integriert sein. Bei weiteren Ausführungen umfasst das Druckmessmodul 26 auch eine Empfangseinrichtung, die über den als Antenne wirkenden Ventilhauptkörper 2 und das Koppelelement 34 Funksignale von einer (beispielsweise zentralen) Sende- oder Steuereinrichtung empfangen kann. Zu dem Druckmessmodul 26 übertragene Signale können dazu verwendet werden, um die Reifendruckmessvorrichtung 4 zu identifizieren, zu kalibrieren und/oder während des Betriebs zu steuern.

### Bezugszeichenliste

- Ventilhauptkörper: 2
- Reifendruckmessvorrichtung: 4
- Ventilaufnahme: 6
- Ventilkappe: 8
- Dichtelement: 10
- Dichtung: 12
- Reifendruckmessvorrichtungsaufnahme: 14
- Aufnahmeraum: 16
- Aufnahmeöffnung: 18
- zylindrische Seitenwand: 20
- planer Boden: 22
- plastisch verformbarer Bereich: 24
- Druckmessmodul: 26
- Modulgehäusehauptkörper: 28
- Modulgehäusedeckel: 30
- Platine: 32
- Koppelelement: 34
- Hülse: 36
- Feder: 38
- Kugel 40: Batterieaufnahmeraum 42
- Ausnehmung (Modulgehäusehauptkörper): 44
- Ausnehmung (Modulgehäusedeckel): 46
- Gewindebohrung (Modulgehäusedeckel): 48
- Energiespeicher: 50
- Schraube: 52
- Durchgang: 54
- Absatz: 56
- Rand (Modulgehäusedeckel): 58
- Pfeil (Bewegungsrichtung): 60

## Patentansprüche

1. Fahrzeugreifendruckmesseinheit umfassend:
- eine Ventilvorrichtung mit einem Ventilhauptkörper (2) mit einer Ventilaufnahme (6) zur Aufnahme eines Ventils und einer Reifendruckmessvorrichtungsaufnahme (14), die einen Aufnahmeraum (16) zur Aufnahme einer Reifendruckmessvorrichtung (4) und eine Aufhahmeöffnung (18) zum Einbringen der Reifendruckmessvorrichtung (4) in den Aufnahmeraum (16) aufweist, und
- eine im Aufnahmeraum (16) angeordneten Reifendruckmessvorrichtung (4) mit einem Druckmessmodul (26), das einen Modulgehäusehauptkörper (28) und einen Modulgehäusedeckel (30) aufweist, der mit dem Modulgehäusehauptkörper (28) verbindbar ist, wobei
- der Aufnahmeraum (16) der Ventilvorrichtung so dimensioniert ist, die Reifendruckmessvorrichtung (4) im Wesentlichen vollständig aufzunehmen und die Reifendruckmessvorrichtung (4) abgesehen vom Bereich der Aufnahmeöffnung (18) im Wesentlichen vollständig zu umschließen vermag,
- die Reifendruckmessvorrichtungsaufnahme (14) benachbart zu der Aufnahmeöffnung (18) einen plastisch verformbaren Bereich (24) aufweist und/oder der Aufnahmeraum (16) ein Innengewinde aufweist, und
- das Druckmessmodul (26) einen Absatz (56) zur Wirkverbindung mit dem elastischen Bereich (24) der Aufnahmeöffnung (18) und/oder ein Außengewinde zur Wirkverbindung mit dem Innengewinde des Aufnahmeraums (16) aufweist,
**dadurch gekennzeichnet, dass**
- der Ventilhauptkörper (2) zur Anordnung in einer Ventillochbohrung einer Felge vorgesehen ist,
- die Reifendruckmessvorrichtungsaufnahme (14) sich bei an der Felge befestigtem Ventilhauptkörper (2) von der Felgeninnenseite wegerstreckt,
- ein Durchgang (54) sich durch den Ventilhauptkörper (2) erstreckt, der für eine Fluidverbindung zwischen der Ventilaufnahme (6) und eines den Ventilhauptkörper (2) umgebenden Bereichs sorgt, welcher bei Verwendung im Reifen liegt, und
- der Teil des Ventilkörpers (2) mit der Ventilaufnahme (6) sich bei an der Felge befestigtem Ventilhauptkörper (2) von der Felgenaußenseite wegerstreckt.

2. Fahrzeugreifendruckmesseinheit nach Anspruch 1, bei der am und/oder in dem Modulgehäusehauptkörper (28) elektrische und/oder elektronische Komponenten zur Reifendruckerfassung und Übertragung entsprechender Messsignale angeordnet sind.

3. Fahrzeugreifendruckmesseinheit nach einem der vorherigen Ansprüche, bei der
- wenigstens ein Teil des Ventilhauptkörpers (2) wenigstens einen Teil einer Antenne für die Reifendruckmessvorrichtung (4) bildet, und
- die Reifendruckmessvorrichtung (2) ein elastisch gelagertes und mit einem Antennenausgang einer Sendeeinrichtung des Druckmessmoduls (26) verbundenes Koppelelement (34) zur elektrischen Kopplung mit den Ventilhauptkörper (2) aufweist.

4. Fahrzeugreifendruckmesseinheit nach Anspruch 3, bei der das Koppelelement (34) einen elektrisch leitfähigen Stift oder Kugel (40) und eine Feder (38) zur elastischen Lagerung des Stifts bzw. Kugel (40) umfasst.

5. Fahrzeugreifendruckmesseinheit nach einem der vorherigen Ansprüche, bei der das Druckmessmodul (26) einen Batterieaufnahmeraum (42) aufweist, der vorzugsweise mittels des Modulgehäusedeckels (30) verschließbar ist.

6. Fahrzeugreifendruckmesseinheit nach einem der vorherigen Ansprüche, bei der der Aufnahmeraum (16) eine zylindrische Seitenwand (20) und/oder einen im Wesentlichen planen Boden (22) aufweist.

7. Fahrzeugreifendruckmesseinheit nach einem der vorherigen Ansprüche, bei der der sich durch den Ventilhauptkörper (2) erstreckende Durchgang (54) zur Fluidverbindung der Ventilaufnahme (6) und eines den Ventilhauptkörper (2) umgebenden Bereichs benachbart zu der Reifendruckmessvorrichtungsaufnahme (14) angeordnet ist.

8. Fahrzeugreifendrucksystem mit
- wenigstens einer Fahrzeugreifendruckmesseinheit nach einem der vorherigen Ansprüche, und
- einer Empfangseinrichtung zum Empfang von von einer der Fahrzeugreifendruckmesseinheiten gesendeten Signalen.

9. Fahrzeugreifendrucksystem nach Anspruch 8 mit einer Sendeeinrichtung zum Senden von Signalen zu einer der Fahrzeugreifendruckmesseinheiten und/oder einer Steuerung, um Reifendruck angebende Signale der wenigstens einen Fahrzeugreifendruckmesseinheit auszuwerten und/oder die wenigstens eine Fahrzeugreifendruckmesseinheit zu steuern.

## Claims

1. A vehicle tyre-pressure measuring unit comprising:
- a valve device with a valve main body (2) with a valve retainer (6) for retaining a valve, and a tyre-pressure measuring-device retainer (14) which provides a retaining space (16) for retaining a tyre-pressure measuring device (4) and a receiving aperture (18) for the introduction of the tyre-pressure measuring device (4) into the retaining space (16), and
- a tyre-pressure measuring device (4) arranged in the retaining space (16) with a pressure-measuring module (26), which comprises a module-housing main body (28) and a module-housing cover (30), which can be connected to the module-housing main body (28),
wherein
- the retaining space (16) of the valve device is dimensioned substantially so to accommodate the tyre-pressure measuring device (4) completely and can enclose the tyre-pressure measuring device (4) substantially completely, apart from the region of the receiving aperture (18),
- adjacent to the receiving aperture (18), the tyre-pressure measuring-device retainer (14) comprises a region (24) capable of plastic deformation and/or the retaining space (16) comprises an internal thread, and
- the pressure-measuring module (26) comprises a shoulder (56) for active connection to an elastic region (24) of the receiving aperture (18) and/or an external thread for active connection with the internal thread of the retaining space (16),
**characterised in that**
- the valve body (2) is provided for arrangement in a valve borehole of a wheel rim,
- the tyre-pressure measuring-device retainer (14) extends away from the internal side of the wheel rim when the valve main body (2) is attached to the wheel rim,
- a through-passage (54) extends through the valve main body (2), which ensures a fluid connection between the valve retainer (6) and a region surrounding the valve main body (2), which is disposed within the tyre during use, and
- the part of the valve body (2) with the valve retainer (6) extends away from the external side of the wheel rim [with] the valve main body (2) attached to the wheel rim.

2. The vehicle tyre-pressure measuring unit according to claim 1, in which electrical and/or electronic components are arranged on and/or in the module-housing main body (28) to register the tyre-pressure and to transmit corresponding measurement signals.

3. The vehicle tyre-pressure measuring unit according to any one of the preceding claims, in which
- at least a part of the valve main body (2) forms at least a part of an antenna for the tyre-pressure measuring device (4), and
- the tyre-pressure measuring device (2) comprises an elastically mounted coupling element (34) connected to an antenna output of a transmitter device of the pressure-measuring module (26) for electrical coupling with the valve main body (2).

4. The vehicle tyre-pressure measuring unit according to claim 3, in which the coupling element (34) includes an electrically conducting pin or ball (40) and a spring (38) for the elastic bearing of the pin or respectively ball (40).

5. The vehicle tyre-pressure measuring unit according to any one of the preceding claims, in which the pressure-measuring module (26) comprises a battery retaining compartment (42), which can preferably be sealed by means of the module-housing cover (30).

6. The vehicle tyre-pressure measuring unit according to any one of the preceding claims, in which the retaining space (16) comprises a cylindrical lateral wall (20) and/or a substantially flat floor (22).

7. The vehicle tyre-pressure measuring unit according to any one of the preceding claims, in which the through-passage (54) extending through the valve main body (2) is arranged for the fluid connection of the valve retainer (6) and a region surrounding the valve main body (2) adjacent to the tyre-pressure measuring-device retainer (14).

8. A vehicle tyre-pressure system with
- at least one vehicle tyre-pressure measuring unit according to any one of the preceding claims, and
- a receiver device for the reception of signals transmitted from one of the vehicle tyre-pressure measuring units.

9. The vehicle tyre-pressure system according to claim 8 with a transmitter device for the transmission of signals to one of the vehicle tyre-pressure measuring units and/or a control unit to evaluate signals specifying tyre-pressure of the at least one vehicle tyre-pressure measuring unit and/or to control the at least one vehicle tyre-pressure measuring unit.

## Revendications

1. Unité de mesure de pression de pneu de véhicule comprenant :
- un dispositif de soupape présentant un corps principal de soupape (2) avec un logement de soupape (6) pour le logement d'une soupape et un logement de dispositif de mesure de pression de pneu (14) qui présente un espace de logement (16) pour le logement d'un dispositif de mesure de pression de pneu (4) et une ouverture de logement (18) pour l'introduction du dispositif de mesure de pression de pneu (4) dans l'espace de logement (16), et
- un dispositif de mesure de pression de pneu (4) disposé dans l'espace de logement (16) avec un module de mesure de pression (26) qui présente un corps principal de boîtier de module (28) et un couvercle de boîtier de module (30) qui peut être relié au corps principal de boîtier de module (28),
- l'espace de logement (16) du dispositif de soupape étant dimensionné afin de loger sensiblement complètement le dispositif de mesure de pression de pneu (4) et pouvant entourer sensiblement complètement le dispositif de mesure de pression de pneu (4) mise à part la zone de l'ouverture de logement (18),
- le logement de dispositif de mesure de pression de pneu (14) présentant de manière contiguë à l'ouverture de logement (18) une zone déformable plastiquement (24) et/ou l'espace de logement (16) présentant un filetage intérieur, et
- le module de mesure de pression (26) présentant un épaulement (56) pour la liaison active avec la zone élastique (24) de l'ouverture de logement (18) et/ou un filetage extérieur pour la liaison active avec le filetage intérieur de l'espace de logement (16), **caractérisée en ce que**
- le corps principal de soupape (2) est prévu pour l'agencement dans un trou pour soupape d'une jante,
- le logement de dispositif de mesure de pression de pneu (14) s'étend depuis le côté intérieur de jante lorsque le corps principal de soupape (2) est fixé sur la jante,
- un passage (54) s'étend au travers du corps principal de soupape (2), lequel veille à une liaison fluidique entre le logement de soupape (6) et une zone entourant le corps principal de soupape (2) qui se trouve en utilisation dans le pneu, et
- la partie du corps de soupape (2) avec le logement de soupape (6) s'étend depuis le côté extérieur de jante sur le corps principal de soupape (2) fixé sur la jante.

2. Unité de mesure de pression de pneu de véhicule selon la revendication 1, dans laquelle des composants électriques et/ou électroniques sont disposés sur et/ou dans le corps principal de boîtier de module (25) pour la détection de la pression de pneu et la transmission de signaux de mesure correspondants.

3. Unité de mesure de pression de pneu de véhicule selon l'une quelconque des revendications précédentes, dans laquelle
- au moins une partie du corps principal de soupape (2) forme au moins une partie d'une antenne pour le dispositif de mesure de pression de pneu (4), et
- le dispositif de mesure de pression de pneu (2) présente un élément de couplage (34) logé élastiquement et relié à une sortie d'antenne d'un dispositif d'émission du module de mesure de pression (26) pour le couplage électrique avec le corps principal de soupape (2).

4. Unité de mesure de pression de pneu de véhicule selon la revendication 3, dans laquelle l'élément de couplage (34) comporte une tige ou sphère électroconductrice (40) et un ressort (38) pour le logement de la tige ou sphère (40).

5. Unité de mesure de pression de pneu de véhicule selon l'une quelconque des revendications précédentes, dans laquelle le module de mesure de pression (26) présente un espace de logement de batterie (42) qui peut être refermé de préférence à l'aide du couvercle de boîtier de module (30).

6. Unité de mesure de pression de pneu de véhicule selon l'une quelconque des revendications précédentes, dans laquelle l'espace de logement (16) présente une paroi latérale cylindrique (20) et/ou un fond (22) sensiblement plat.

7. Unité de mesure de pression de pneu de véhicule selon l'une quelconque des revendications précédentes, dans laquelle le passage (54) s'étendant au travers du corps principal de soupape (2) est disposé pour la liaison fluidique du logement de soupape (6) et d'une zone entourant le corps principal de soupape (2) de manière contiguë au logement de dispositif de mesure de pression de pneu (14).

8. Système de pression de pneu de véhicule avec
- au moins une unité de mesure de pression de pneu de véhicule selon l'une quelconque des revendications précédentes, et
- un dispositif de réception pour la réception de signaux émis par l'une des unités de mesure de pression de pneu de véhicule.

9. Système de pression de pneu de véhicule selon la revendication 8, avec un dispositif d'émission pour l'envoi de signaux à l'une des unités de mesure de pression de pneu de véhicule et/ou une commande afin d'évaluer des signaux indiquant la pression de pneu de l'au moins une unité de mesure de pression de pneu de véhicule et/ou de commander l'au moins une unité de mesure de pression de pneu de véhicule.
